# EUROPEAN PATENT SPECIFICATION

(11) **EP 3 900 509 B1**
(45) Date of publication and mention of the grant of the patent: **04.09.2024**
(21) Application number: 19899894.0
(22) Date of filing: 11.12.2019
(51) Int. Cl.: A01B 69/04, B60W 60/00, G05D 1/00

(54) **FIELD OPERATION VEHICLE**
FELDBETRIEBSFAHRZEUG
VÉHICULE AGRICOLE

(30) Priority: 20.12.2018 JP 2018238893
(43) Date of publication of application: 27.10.2021
(73) Proprietor: Kubota Corporation, Osaka 556-8601 (JP)
(72) Inventor: TAKASE, Shunya, Sakai-shi, Osaka 590-0823 (JP); MISAKI, Shinji, Sakai-shi, Osaka 590-0823 (JP)
(74) Representative: Müller-Boré & Partner Patentanwälte PartG mbB
(86) International application number: PCT/JP2019/048370
(87) International publication number: WO 2020/129759

(56) References cited:
- JP-A- 2018 045 709
- JP-A- 2018 073 399
- JP-A- 2018 113 943
- JP-A- 2018 116 613
- US-A1- 2017 177 002
- US-A1- 2018 206 391
- US-A1- 2018 210 449

## Description

### Technical Field

The present invention relates to an agricultural field work vehicle capable of traveling autonomously along a target travel path.

### Background Art

An agricultural field work vehicle configured to travel autonomously along a target travel path suspends work for any of various reasons and moves off the target travel path. An agricultural field work vehicle is required to move off a target travel path while performing work for lack of fuel or due to a limit on the work capacity (such as a limit on the harvest capacity or addition of an agent to be supplied to the agricultural field). The agricultural field work vehicle moves to a particular place to overcome a circumstance that required the agricultural field work vehicle to move off the target travel path, and then returns to the position at which the agricultural field work vehicle moved off the target travel path. At that position, the agricultural field work vehicle resumes performing work during autonomous travel.

Japanese unexamined patent application publication, Tokukai, No. 2018-116613 discloses a work vehicle configured to, when the work vehicle suspends work travel, record suspension information on the work travel suspended. When the work vehicle resumes the work travel suspended, a monitor displays the position at which the work vehicle suspended the work travel (which position is recorded in the suspension information) as a work resumption position together with a travel path set for the agricultural field. The work resumption position, which is indicated in resumption information, is either a point at which the work vehicle suspended the previous work travel or an end of a linear portion of the travel path extending through the point.

Document US 2018/206391 A1 describes a travel control apparatus for a work vehicle including a display and a circuitry. The display is to display a position of the work vehicle. The circuitry is configured to display in the display a guide index via which the work vehicle is manually guided to an automatic-travel permitted area in which the work vehicle is configured to automatically travel, and to determine whether the work vehicle is located in the automatic-travel permitted area.

Document US 2017/177002 A1 describes an autonomous travel work vehicle, which is provided with a position calculation means that measures the device body position by means of a satellite positioning system, a steering actuator that operates a steering device, an engine rotation control means, a transmission means, and a control device that controls each of same, is caused to autonomously travel, along a set travel path stored in the control device, by an accompanying travel work vehicle that works while accompanying the travel of the autonomous travel work vehicle by means of attended operation and that is mounted with a remote operation device that can operate the autonomous travel work vehicle, and the control device halts autonomous travel when a signal disruption from the satellites, a large deviation from the set travel path, an abnormal sensor value, fuel exhaustion, or the like is detected.

Document JP 2018/073399 A1 describes a travel route generation device for generating a travel route for a work vehicle that travels while working in a work site, comprising a route management section that calculates a travel route element group which is the aggregate of many travel route elements composing the travel route covering a work object area of the work site and that stores the travel route element group such that the element group is readable. This travel route element group is a line group formed from mesh-division lines for mesh-dividing the work object area.

### Summary of Invention

### Technical Problem

The work vehicle disclosed in JP 2018-116613 is, when resuming work travel after suspending it and moving off a travel path, manually driven to a work resumption position displayed on the monitor, and the work vehicle starts autonomous travel at the work resumption position. The work vehicle will, however, not start autonomous travel even when it has come to a position near the work resumption position if the control system of the work vehicle fails at that position to detect the travel path as a target for autonomous travel. Further, even if the control system has detected the target travel path, and the work vehicle is to resume autonomous travel, the work vehicle may, depending on the positional relationship between the travel path and the work vehicle, be steered by a large amount when resuming autonomous travel and damage the agricultural field.

In view of the above circumstances, it is an object of the present invention to provide an agricultural field work vehicle capable of, after suspending agricultural field work during autonomous travel and moving off a target travel path, resuming autonomous travel smoothly at a desired work resumption position.

### Solution to Problem

The claimed invention is defined by the features set forth in the appended independent claim. Additional embodiments of the claimed invention are defined by the dependent claims.

With the claimed arrangement, if the agricultural field work vehicle has moved off a target travel path for refueling or rest of the driver, the agricultural field work vehicle records either or both of the move-off position and the move-off travel path as move-off information. When resuming the agricultural field work, the agricultural field work vehicle selects, on the basis of the move-off information, an initial target travel path (resumption travel path) on which the agricultural field work vehicle will resume traveling autonomously. When the agricultural field work vehicle has been driven manually to a position near the selected target travel path, the determining section determines whether the agricultural field work vehicle is able to transition smoothly from manual travel to autonomous travel. The determining section determines, for instance, whether the autonomous travel control system has located the resumption travel path and/or whether the agricultural field work vehicle will be able to travel autonomously along the resumption travel path without a steering operation so large as to damage the agricultural field. Thus, if the determining section has determined that the agricultural field work vehicle will be able to travel autonomously, the agricultural field work vehicle will transition smoothly from manual travel to autonomous travel.

A further embodiment of the present invention further includes: a manual operation tool configured to start autonomous travel by the vehicle body, wherein after the determining section has determined that the agricultural field work vehicle is able to perform the transition, the manual operation tool is operated to cause the autonomous travel control section to start the autonomous travel by the vehicle body. This embodiment is arranged to transition from manual travel to autonomous travel under a transition condition of whether the determining section has determined that the agricultural field work vehicle is able to transition to autonomous travel and a transition condition of whether the manual operation tool has been operated. With this arrangement, the determining section ensures smooth transition. If the driver performs a manual operation for a command to transition from manual travel to autonomous travel, it will not cause the agricultural field work vehicle to damage the agricultural field. Further, since a person such as the driver causes the agricultural field work vehicle to start traveling autonomously, the driver will not be surprised by a sudden start of autonomous travel.

A further embodiment of the present invention is further arranged such that in a case where the determining section has determined that the agricultural field work vehicle is able to perform the transition, the determining section transmits to a notification unit a notification command to notify a driver that the transition is allowable. This embodiment is arranged to, if the determining section has determined that the agricultural field work vehicle is able to transition from manual travel to autonomous travel, notify the driver that the agricultural field work vehicle is allowed to travel autonomously. This allows the driver to be ready for automatic transition to autonomous travel. Further, in a case where the driver definitively selects to cause the agricultural field work vehicle to transition to autonomous travel, the driver can cause the agricultural field work vehicle at a desired time point to transition smoothly to autonomous travel because the control device ensures that the agricultural field work vehicle is able to transition to autonomous travel.

Smooth transition from manual travel to autonomous travel depends on a plurality of conditions, one of which is whether the vehicle body is close to a resumption travel path, that is, that target travel path on which the agricultural field work vehicle will travel autonomously. If the vehicle body is close enough to a resumption travel path for the control system to accurately locate the resumption travel path, the control system can calculate a positional deviation of the vehicle body from the resumption travel path. After calculating a positional deviation, the control system generates a steering signal intended to reduce the positional deviation. This allows the vehicle body to travel autonomously along the resumption travel path. If the vehicle body is apart excessively from a resumption travel path, the control system is unable to locate the resumption travel path. The control system is able to locate a resumption travel path within an experimentally or theoretically calculated zone. A further embodiment of the present invention is thus further arranged such that in response to the vehicle body having entered a zone set near the resumption travel path, the determining section determines that the agricultural field work vehicle is able to perform the transition.

In a case where the agricultural field work vehicle has suspended autonomous travel along a target travel path and moved off the target travel path partway, the agricultural field work vehicle may resume the autonomous travel not at the move-off position but at the travel starting end of the target travel path. In such a case, the agricultural field work vehicle performs no work or redundant work from the resumption position to the move-off position. The agricultural field work vehicle may resume the autonomous travel at the travel starting end of the target travel path because the agricultural field work vehicle is more likely to transition smoothly to autonomous travel in the case where the vehicle body enters the target travel path at the travel starting end than in the case where the vehicle body enters the target travel path at the intermediate, move-off position. A further disclosure is that in response to the vehicle body having entered a zone set near a travel starting end of the resumption travel path, the determining section determines that the agricultural field work vehicle is able to perform the transition.

If the agricultural field work vehicle has moved off a target travel path partway, the agricultural field work vehicle is able to enter the target travel path (resumption travel path) at the move-off position from a side of the target travel path. A further disclosure is that in response to the vehicle body having entered a zone set near the move-off position, the determining section determines that the agricultural field work vehicle is able to perform the transition.

The agricultural field work vehicle is able to enter a resumption travel path more smoothly when the direction of the vehicle body (that is, its front-back direction) is closer to the direction of the resumption travel path (that is, the direction in which the resumption travel path extends). The determination section preferably further uses a determination condition about the direction of the vehicle body in determining whether the agricultural field work vehicle is able to transition from manual travel to autonomous travel. A further embodiment of the present invention is thus further arranged such that the determining section further determines, as a condition for determining whether the agricultural field work vehicle is able to transition, whether the vehicle body has a directional deviation from the resumption travel path which directional deviation is within an allowable deviation range.

### Brief Description of Drawings

Fig. 1 is a side view of a tractor.
Fig. 2 is a perspective view of an autonomous travel start operation tool and a teaching operation tool.
Fig. 3 is a diagram illustrating travel paths along which a tractor performs tillage work.
Fig. 4 is a diagram illustrating how a tractor performs move-off travel and return travel.
Fig. 5 is a functional block diagram illustrating a control system of a tractor.
Fig. 6 is a diagram illustrating a determination rule under which a tractor having moved off a travel path resumes autonomous travel.
Fig. 7 is a diagram illustrating a determination rule under which a tractor having moved off a travel path resumes autonomous travel.
Fig. 8 is a diagram illustrating a determination rule under which a tractor having moved off a travel path resumes autonomous travel.
Fig. 9 is a diagram illustrating a determination rule under which a tractor having moved off a travel path resumes autonomous travel.

### Description of Embodiments

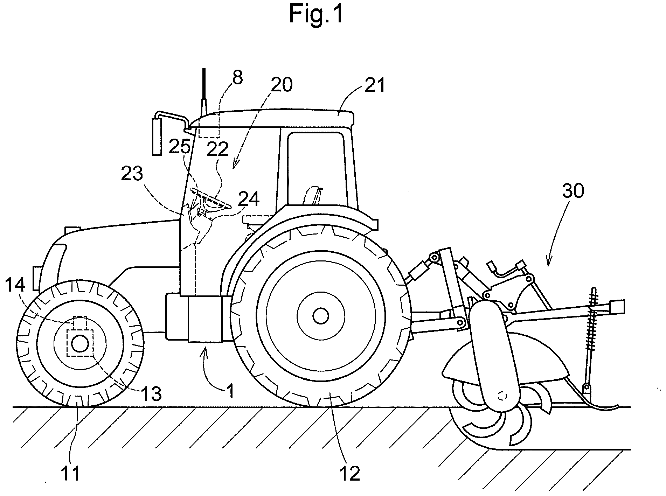

The description below deals with, as an embodiment of the present invention, an agricultural field work vehicle configured to travel autonomously along a target travel path. Fig. 1 is a side view of a tractor as an example of such an agricultural field work vehicle. As illustrated in Fig. 1, the tractor includes front wheels 11, rear wheels 12, a vehicle body 1 supported by the front wheels 11 and the rear wheels 12, and a cab 20 at a central portion of the vehicle body 1. The tractor is provided with a rotary tiller device as a work device 30 attached to a back portion of the vehicle body 1 via a hydraulic lifting/lowering mechanism. The front wheels 11 function to steer the tractor: changing their steering angle changes the direction in which the tractor travels. The steering angle of the front wheels 11 is changed through operation of a steering mechanism 13. The steering mechanism 13 includes a steering motor 14 for autonomous steering during autonomous travel. During manual travel, the front wheels 11 are controlled through operation of a steering wheel 22 provided in the cab 20. The tractor includes a positioning unit 8 that is present at an upper portion of a cabin 21 defining the cab 20 and that is configured to detect the vehicle position. The tractor includes a panel unit 23 near the steering wheel 22.

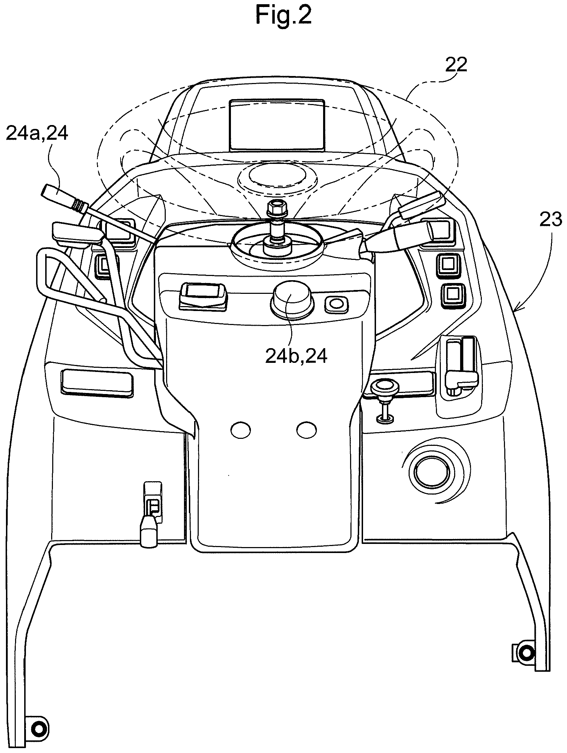

The panel unit 23 includes a manual operation tool group 24 and a monitor 25 provided with a touch screen. Fig. 2 illustrates the manual operation tool group 24 included in the panel unit 23. The manual operation tool group 24 includes an autonomous travel start operation tool 24a and a teaching operation tool 24b as tools particularly relevant to the present invention. For the present embodiment, the autonomous travel start operation tool 24a is in the form of an operating lever, whereas the teaching operation tool 24b is in the form of a button switch.

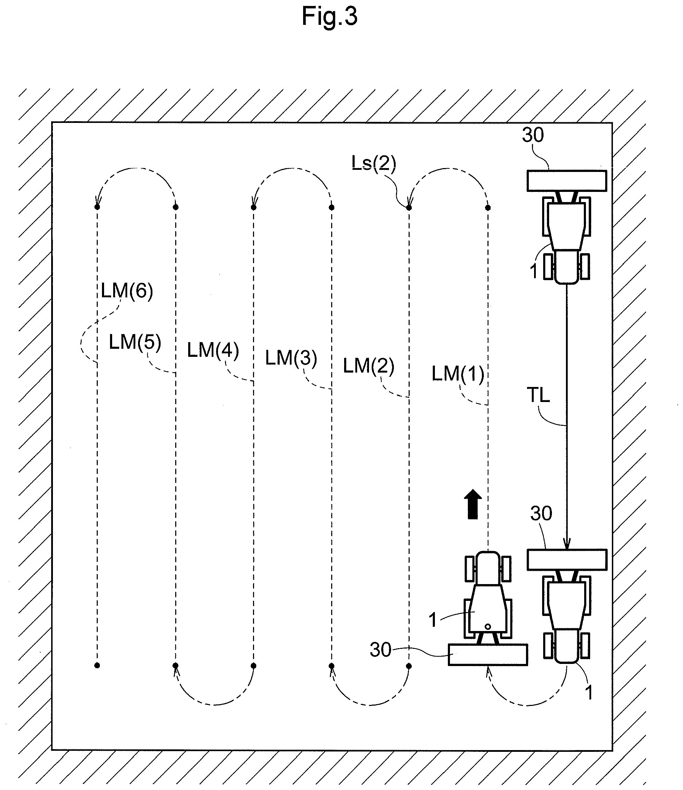

Fig. 3 schematically illustrates example tillage work performed by the tractor. The tillage work involves alternating between (i) straight travel during which the tractor travels along a linear work path while performing tillage work and (ii) turn travel through which the tractor moves to a subsequent linear work path. The tractor is manually driven to travel along the first linear work path, which serves as a teaching path TL. The tractor sets subsequent linear paths sequentially in such a pattern that the subsequent linear paths are next to one another and parallel to the teaching path TL. The subsequent linear paths each serve as a target travel path for autonomous travel, and are labeled as LM(1) to LM(6) in Fig. 3.

The description below deals with a basic travel process during the tillage work. To start tillage work, the driver manually drives the tractor to position the vehicle body 1 at a teaching start point close to a ridge of the agricultural field, and then presses the teaching operation tool 24b. The driver manually drives the tractor to cause the vehicle body 1 to travel from the teaching start point linearly along the ridge to a teaching end point present on the opposite side and close to the ridge, and then presses the teaching operation tool 24b again. This allows a teaching path TL to be calculated from the position coordinates of the vehicle body 1 at the teaching start point and the position coordinate of the vehicle body 1 at the teaching end point, the teaching path TL connecting the teaching start point with the teaching end point.

After the teaching path TL has been set, the driver causes the tractor to perform 180-degree turn travel (U-turn travel) to move to the first target travel path LM(1), which is adjacent to the teaching path TL.

Before or after the end of the turn travel, the tractor checks whether the vehicle body 1 is directed suitably for subsequent tillage work, that is, the vehicle body 1 has a travel deviation relative to the target travel path LM(1) which travel deviation is within an acceptable range. If the travel deviation is within the acceptable range, the driver is notified that the tractor is able to travel autonomously along the target travel path LM(1). In response to the notification, the driver operates the autonomous travel start operation tool 24a. This causes the tractor to start autonomous travel with the target travel path LM(1) set as a target.

After starting autonomous travel, the tractor steers itself autonomously so that the vehicle body 1 remains along the target travel path LM(1). The target travel path LM(1) is a target travel path LM along which the vehicle body 1 performs work travel first after teaching travel. When the autonomous travel along the target travel path LM(1) has ended, the driver drives the tractor along a turn travel path (U-turn travel path). Then, the tractor sets a subsequent target travel path LM(2) that is adjacent to the previous target travel path LM(1) and present on the side of an unworked region and that extends from a starting point position Ls(2). Subsequently, the tractor repeats setting a target travel path LM and performing work travel in the order of target travel paths LM(3), LM(4), LM(5), and LM(6) with turn travel in-between.

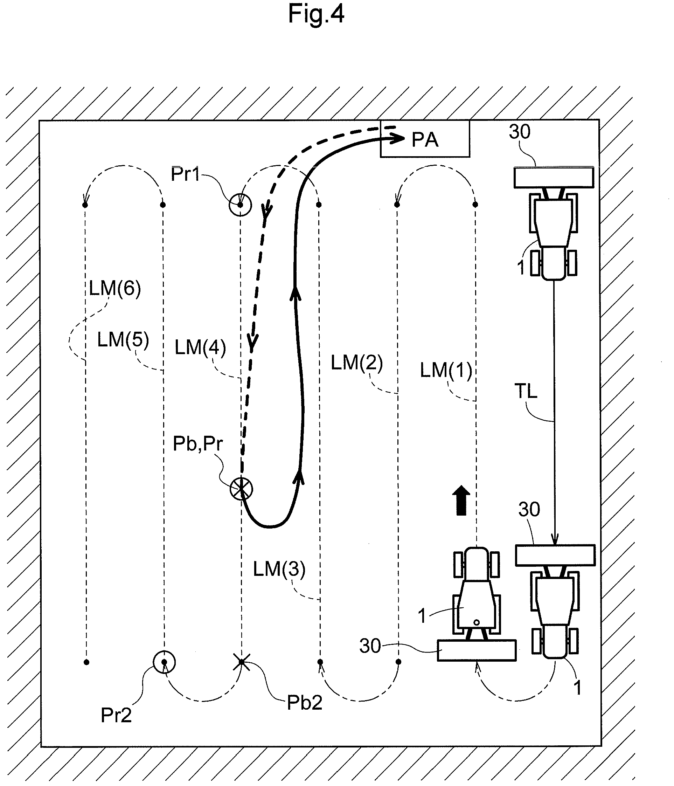

As illustrated in Fig. 4, if the tractor encounters a circumstance while performing work during autonomous travel which circumstance requires the tractor to move off the current travel path, the driver stops the autonomous travel and manually drives the tractor from a move-off position (indicated as "Pb" or "Pb2" in Fig. 4) to a parking area PA. When the circumstance has been overcome, the driver manually drives the tractor from the parking area PA to a resumption position (indicated as "Pr" or "Pr2" in Fig. 4), where the tractor resumes performing work during autonomous travel.

Fig. 4 illustrates an example in which the move-off position Pb and the resumption position Pr coincide with each other. The move-off position Pb and the resumption position Pr may alternatively be two different positions. For instance, since the tractor has moved off at the move-off position Pb during travel along the target travel path LM(4), the resumption position may be at the travel starting end of the target travel path LM(4) (indicated as "Pr1" in Fig. 4). If, for instance, the tractor has moved off after finishing the travel along the target travel path LM(4), the move-off position will be at the travel ending end of the target travel path LM(4) (indicated as "Pb2" in Fig. 4), whereas the resumption position will be at the travel starting end of the subsequent target travel path LM(5) (indicated as "Pr2" in Fig. 4).

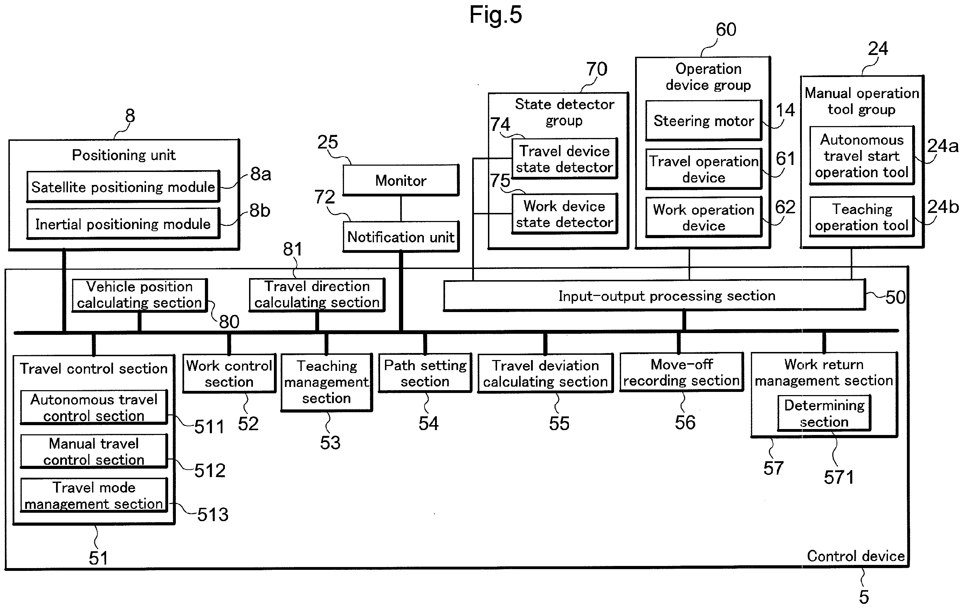

The description below deals with functional sections of a control system of the tractor with reference to Fig. 5. The tractor includes a satellite positioning module 8a and an inertial positioning module 8b as included in the positioning unit 8. The satellite positioning module 8a has a satellite positioning function: it is capable of determining the position of the vehicle body 1 with use of a satellite positioning system configured to receive a radio wave from a satellite and detect the position of the vehicle body 1. The inertial positioning module 8b includes, for example, a gyro sensor and an acceleration sensor, and is thereby capable of detecting the angular velocity of a turn of the vehicle body 1. The inertial positioning module 8b is capable of integrating the angular velocity to determine an angular change in the vehicle body direction. The inertial positioning module 8b is preferably present at a low position on the vehicle body 1 which position is at the middle in the width direction of the vehicle body 1. The inertial positioning module 8b may alternatively be present at a different position, for example, where the satellite positioning module 8a is present.

The control device 5 includes an input-output processing section 50 as an input-output interface. The input-output processing section 50 is connected to, for example, an operation device group 60, a state detector group 70, and the manual operation tool group 24. The positioning unit 8 is connected to the control device 5 over an in-vehicle LAN. The monitor 25 as a notification device includes a liquid crystal panel, and is configured to display various information items on the basis of a notification signal from a notification unit 72 configured to control notification. The notification unit 72 is also connected to the control device 5 over the in-vehicle LAN.

The operation device group 60 includes a steering motor 14, a travel operation device 61 (which is a travel-related operation device), and a work operation device 62 (which is a work-related operation device).

The state detector group 70 includes various sensors, switches, and the like such as a travel device state detector 74 and a work device state detector 75. The travel device state detector 74 includes travel state detecting sensors such as a vehicle speed sensor, a steering angle sensor, an engine rotation speed sensor, a brake pedal detecting sensor, and a parking brake detecting sensor (not illustrated in the drawings). The work device state detector 75 includes sensors for detecting the respective states of various mechanisms included in the work device 30 such as a lifting/lowering mechanism.

The control device 5 includes a vehicle position calculating section 80, a travel direction calculating section 81, a travel control section 51, a work control section 52, a teaching management section 53, a path setting section 54, a travel deviation calculating section 55, a move-off recording section 56, and a work return management section 57.

The vehicle position calculating section 80 calculates the map coordinates of the vehicle body 1 (that is, the vehicle position) on the basis of satellite positioning data transmitted sequentially from the positioning unit 8. During the calculation, the vehicle position calculating section 80 converts the position calculated directly from satellite positioning data into a benchmark point on the vehicle body 1 (for example, the position of the vehicle body center or of the work center of the work device 30). The travel direction calculating section 81 processes data on vehicle positions (calculated by the vehicle position calculating section 80) over time to calculate the travel direction of the vehicle body 1, that is, its front-back direction. The travel direction calculating section 81 may alternatively calculate the travel direction on the basis of measurement data from the inertial positioning module 8b.

The travel control section 51 transmits a steering control signal to the steering motor 14, and also transmits, for example, a speed change control signal and a braking control signal to a travel operation device 61 such as a transmission (not illustrated in the drawings). The travel control section 51 includes an autonomous travel control section 511, a manual travel control section 512, and a travel mode management section 513 in order for the tractor to selectively travel autonomously or be driven manually.

The work control section 52 controls various work operation devices 62 each configured to lift and lower the work device 30 or transmit power to the work device 30 while the vehicle body 1 is traveling.

The teaching management section 53 calculates data on a teaching path TL (such as map coordinates) on the basis of the teaching travel described above. The path setting section 54 sets a target travel path as a target of autonomous travel through the procedure described above with reference to Fig. 3.

The travel deviation calculating section 55 calculates (i) a lateral deviation that the vehicle body 1 has at a vehicle position calculated by the vehicle position calculating section 80 and (ii) a directional deviation that the vehicle body 1 has at the vehicle position. A lateral deviation refers to the distance in the direction orthogonal to the direction of the target travel path between the benchmark point on the vehicle body 1 at the vehicle position and a target travel path set by the path setting section 54. A directional deviation refers to the angle formed by the travel direction of the vehicle body 1 calculated by the travel direction calculating section 81 and the target travel path.

The tractor is set to an autonomous travel mode to drive itself autonomously or a manual travel mode to be driven manually. These travel modes are managed by the travel mode management section 513. When the tractor is in the autonomous travel mode, the autonomous travel control section 511 computes, on the basis of a lateral deviation and a directional deviation from the travel deviation calculating section 55, a steering control amount intended to reduce the lateral deviation and the directional deviation. The steering motor 14 is driven (that is, the front wheels 11 are steered) on the basis of the steering control amount.

The move-off recording section 56 records move-off information when the tractor has moved off the target travel path while performing agricultural field work during autonomous travel and headed for a parking area PA as illustrated in Fig. 4. The move-off information is information related to the moving of the vehicle body 1 off the target travel path. The move-off information includes information on the move-off position (that is, the vehicle position that the vehicle body 1 had when it moved off), a move-off travel path (that is, the target travel path serving as a target for autonomous steering control when the tractor moved off), and the travel direction that the vehicle body 1 had on the move-off travel path.

The work return management section 57 selects a resumption travel path, that is, a target travel path that the tractor having moved off a travel path will use when it resumes performing agricultural field work during autonomous travel. The work return management section 57 obtains data on a resumption travel path by reading move-off information from the move-off recording section 56. The work return management section 57 also manages return information, which is for use to guide the vehicle body 1 to the selected resumption travel path or move-off position. The return travel is performed manually. The resumption travel path or move-off position in the agricultural field is preferably shown on the monitor 25 for the driver. The return information includes such information for the monitor 25 to display as (i) image information on an agricultural field map with the resumption travel path and move-off position marked and (ii) text information indicative of the date and time of the moving off and/or the like.

The work return management section 57 includes a determining section 571 configured to determine, while the agricultural field work vehicle is being manually driven for the vehicle body 1 to return to the resumption travel path, whether the agricultural field work vehicle is able to transition from manual travel to autonomous travel. The determining section 571 uses, as a condition for the transition to autonomous travel, a determination rule that corresponds to the current situation. The description below deals with example transition rules. The determining section 571 selectively uses the transition rules below to determine whether the agricultural field work vehicle is able to transition to autonomous travel. The description below of the example transition rules uses the same terms and reference signs as those in Fig. 4.

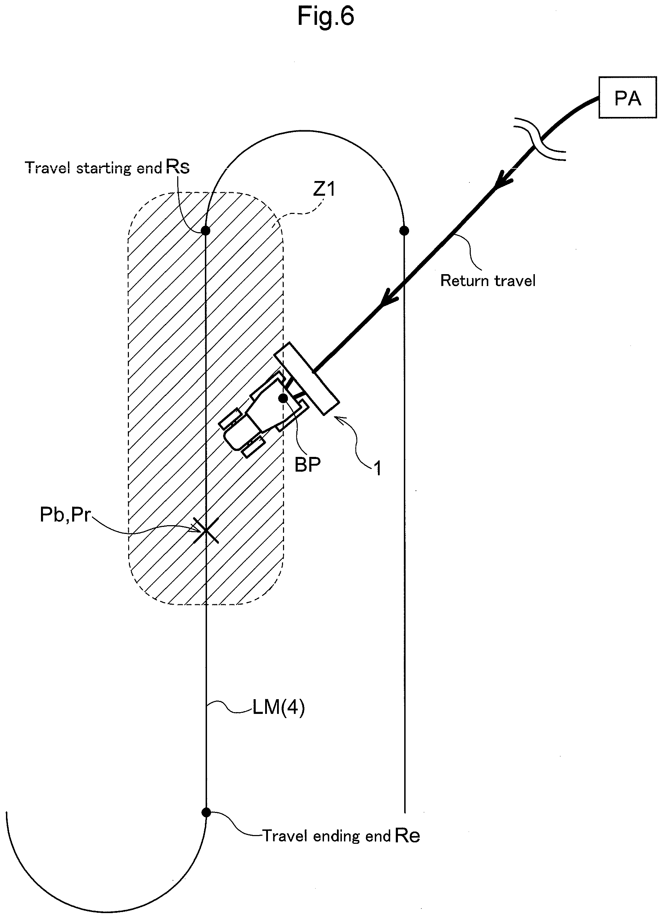

### (a) Determination Rule a (see Fig. 6)

If the benchmark point (indicated as "BP" in Fig. 6) on the vehicle body 1 has entered a first zone (indicated as "Z1" in Fig. 6) set astride a portion of the resumption travel path LM(4), the determining section 571 determines that the agricultural field work vehicle is able to transition to autonomous travel. Fig. 6 illustrates a first zone Z1 as a region extending over a predetermined distance from the line segment between the travel starting end (indicated as "Rs" in Fig. 6) of the resumption travel path LM(4) and the move-off position Pb. This is because if the vehicle body 1 returns onto the line segment between the travel ending end (indicated as "Re" in Fig. 6) of the resumption travel path LM(4) and the move-off position Pb, and the agricultural field work vehicle transitions to autonomous travel, the agricultural field work vehicle will end up leaving an unworked region between the return position and the move-off position Pb. If such an unworked region may be left, the determining section 571 may set a zone Z1, in which the agricultural field work vehicle is able to transition to autonomous travel, in a region astride the entire length of the resumption travel path LM(4). The determining section 571 selects the predetermined distance for the first zone Z1 such that the autonomous travel control section 511 is capable of computing an appropriate steering control amount on the basis of a lateral deviation and a directional deviation both calculated by the travel deviation calculating section 55. Determination Rule a allows the resumption position Pr to be any position on the line segment between the travel starting end RS and the move-off position Pb.

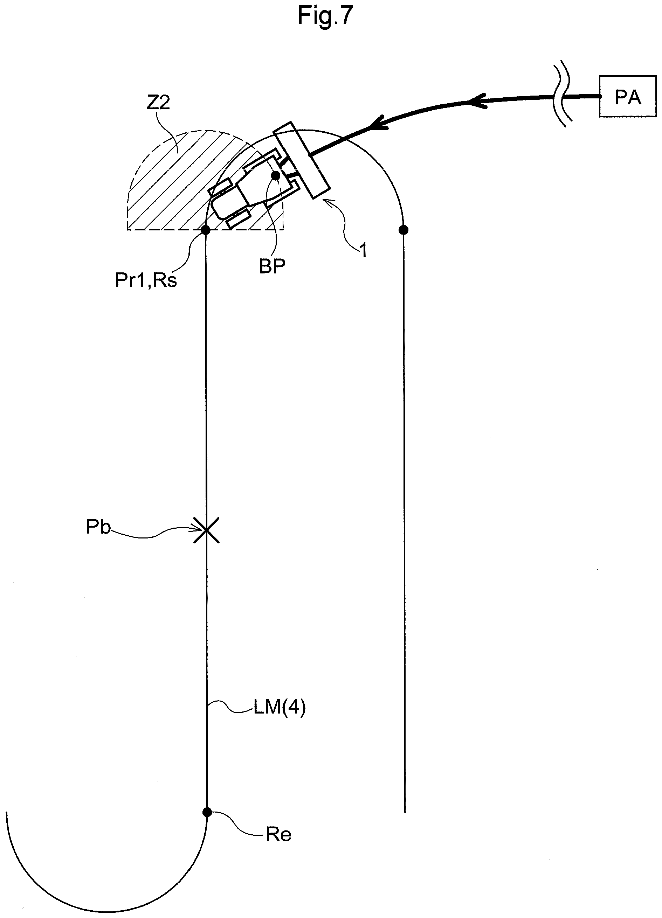

### (b) Determination Rule b (see Fig. 7)

If the benchmark point (indicated as "BP" in Fig. 7) on the vehicle body 1 has entered a second zone (indicated as "Z2" in Fig. 7) set in the vicinity of the travel starting end (indicated as "Rs" in Fig. 7) of the resumption travel path LM(4), the determining section 571 determines that the agricultural field work vehicle is able to transition to autonomous travel. In this example, the travel starting end Rs coincides with a resumption position Pr1. The second zone Z2 is thus in the shape of a semicircle (which may alternatively be a sector) that has a center at the travel starting end Rs and that is on the side of the U-turn travel path. The determining section 571 selects its radius such that the autonomous travel control section 511 is capable of computing an appropriate steering control amount on the basis of a lateral deviation and a directional deviation both calculated by the travel deviation calculating section 55. Under Determination Rule b, the vehicle body 1 performs redundant work or blank travel, that is, travels without performing work, along the line segment between the travel starting end Rs of the resumption travel path LM(4) and the move-off position Pb.

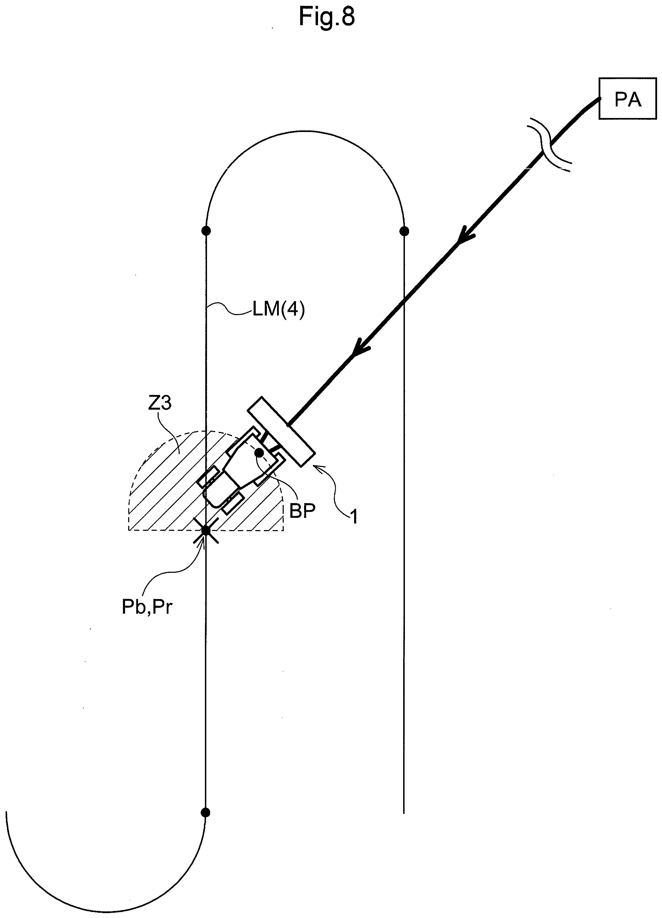

### (c) Determination Rule c (see Fig. 8)

If the benchmark point (indicated as "BP" in Fig. 8) on the vehicle body 1 has entered a third zone (indicated as "Z3" in Fig. 8) set around the move-off position Pb, the determining section 571 determines that the agricultural field work vehicle is able to transition to autonomous travel. In this example, the move-off position Pb coincides with a resumption position Pr. The third zone Z3 is thus in the shape of a semicircle (which may alternatively be a sector) that has a center at the move-off position Pb and that is on the upstream side of the resumption travel path LM(4) in the travel direction. The determining section 571 selects its radius or length to the outer edge such that the autonomous travel control section 511 is capable of computing an appropriate steering control amount on the basis of a lateral deviation and a directional deviation both calculated by the travel deviation calculating section 55. Under Determination Rule c, the move-off position Pb and the resumption position Pr coincide with each other, so that the vehicle body 1 substantially does not perform redundant work or blank travel.

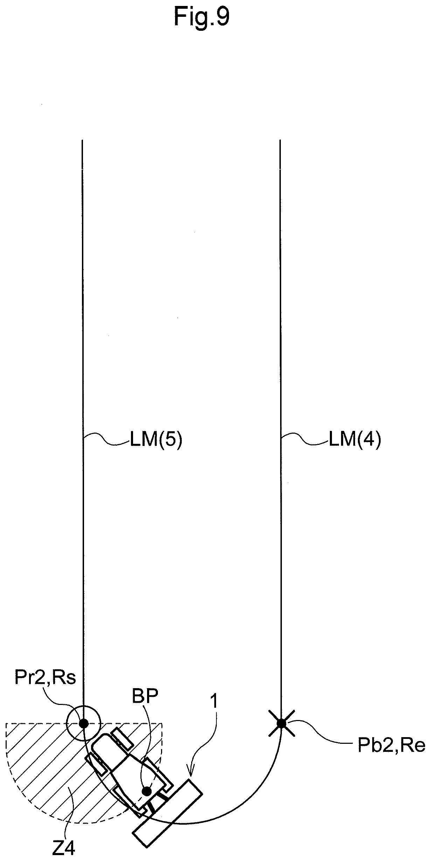

### (d) Determination Rule d (see Fig. 9)

Under the fourth determination rule, which is similar to Determination Rule b, the move-off position Pb2 coincides with the travel ending end (indicated as "Re" in Fig. 9) of the target travel path LM(4), and the resumption position Pr2 coincides with the travel starting end (indicated as "Rs" in Fig. 9) of the resumption travel path LM(5). Thus, if the benchmark point (indicated as "BP" in Fig. 9) on the vehicle body 1 has entered a fourth zone (indicated as "Z4" in Fig. 9) set around the move-off position Pb, the determining section 571 determines that the agricultural field work vehicle is able to transition to autonomous travel. In this example, the travel starting end Rs coincides with a resumption position Pr2. The fourth zone Z4 is thus in the shape of a semicircle (which may alternatively be a sector) that has a center at the travel starting end Rs and that is on the side of the U-turn travel path. The determining section 571 selects its radius or length to the outer edge such that the autonomous travel control section 511 is capable of computing an appropriate steering control amount on the basis of a lateral deviation and a directional deviation both calculated by the travel deviation calculating section 55. Determination Rule d applies also to a case where the vehicle body 1 has moved off the U-turn travel path extending from the target travel path LM(4) to the subsequent target travel path LM(5).

The above-described determination rules to which the determining section 571 refers are each intended to determine whether the vehicle body 1 is present within a predetermined zone, that is, whether the vehicle body 1 is present within a predetermined distance from the position at which the vehicle body 1 will resume autonomous travel. For the vehicle body 1 to enter a travel path, however, the direction of the vehicle body 1 is also an important factor. The present embodiment is thus arranged such that the above-described determination rules each further involve a determination condition of whether the deviation of the direction of the vehicle body 1 from the direction of the resumption travel path (that is, the direction in which the resumption travel path extends) is within an allowable deviation range. Whether a deviation is within the allowable deviation range means whether the crossing angle formed by a line indicative of the vehicle body direction and a line indicative of the direction of the resumption travel path is not larger than an allowable angle. The allowable angle is an angle within which the vehicle body 1 is able to enter a resumption travel path through autonomous steering smoothly without damaging the agricultural field.

When the determining section 571 has determined that the agricultural field work vehicle is able to transition from manual travel to autonomous travel to enter the resumption travel path, the work return management section 57 transmits to the notification unit 72 a notification command to notify the driver of the determination result. In response to the notification command, the notification unit 72 generates a notification signal to, for example, (i) cause the monitor 25 to display information indicating that the agricultural field work vehicle is able to transition to autonomous travel, (ii) turn on a lamp (not illustrated in the drawings), and/or (iii) cause a loudspeaker (not illustrated in the drawings) to emit a sound.

The present embodiment is arranged such that after the determining section 571 has determined that the agricultural field work vehicle is able to transition from manual travel to autonomous travel to enter the resumption travel path, the driver operates the autonomous travel start operation tool 24a to start autonomous travel so that the front wheels 11 are controlled autonomously. The present embodiment may alternatively be arranged to allow autonomous travel to be started automatically, that is, without the operation of the autonomous travel start operation tool 24a.

### [Alternative Embodiments]

(1) The embodiment described above uses front wheels 11 to steer a vehicle body 1 and a steering motor 14 as a steering device. If the embodiment instead uses crawler-type travel devices as a steering system, the autonomous travel control section 511 will control devices configured to change the respective speeds of the left and right crawlers.
(2) The embodiment described above involves linear target travel paths. The target travel paths may alternatively each extend in a curve with a large radius of curvature.
(3) The embodiment described above is arranged such that the driver performs teaching travel first and that the path setting section 54 then sets target travel paths on the basis of a teaching path calculated as a result of the teaching travel. The embodiment may alternatively be arranged such that the driver does not perform teaching travel and that the path setting section 54 generates and sets all target travel paths automatically on the basis of, for example, the shape of the agricultural field.
(4) The functional sections shown in Fig. 5 are grouped mainly for the purpose of description. The functional sections may alternatively each be integral with another functional section(s) or be divided further into a plurality of different functional sections. Further, at least part of the functional sections included in the control device 5 may alternatively be included in a data processing terminal connected to the in-vehicle LAN of the work vehicle.
(5) The control device 5 is not necessarily provided for the vehicle body 1; part or all of the control device 5 may alternatively be present outside the vehicle body 1 in such a state as to be capable of data communication with the vehicle body 1. The embodiment described above may alternatively be arranged, for instance, such that the control device 5 is mounted on a communication terminal or management computer and that the communication terminal or management computer transmits and receives necessary information to and from the vehicle body 1.
(6) The control device 5 may have any configuration as long as it allows functions and processes similar to those described above to be performed. The functions and processes may be achieved by means of hardware or software. If the functions and processes are to be achieved by means of software, the programs are stored in a storage section and executed by a processor such as a CPU or an ECU included in, for example, the control device 5.
(7) The embodiment described above of the present invention is a tractor provided with the control device for the present invention. The control device may alternatively be mounted on other agricultural field work vehicles such as combines and rice transplanters for preferable performance of autonomous travel.

### Industrial Applicability

The present invention is applicable to any agricultural field work vehicle configured to travel autonomously along a target travel path in an agricultural field.

### Reference Signs List

- 1: Vehicle body
- 5: Control device
- 8: Positioning unit
- 8a: Satellite positioning module
- 8b: Inertial positioning module
- 11: Front wheel
- 12: Rear wheel
- 13: Steering mechanism
- 14: Steering motor
- 24: Manual operation tool group
- 24a: Autonomous travel start operation tool
- 24b: Teaching operation tool
- 25: Monitor
- 51: Travel control section
- 511: Autonomous travel control section
- 53: Teaching management section
- 54: Path setting section
- 55: Travel deviation calculating section
- 56: Move-off recording section
- 57: Work return management section
- 571: Determining section
- 72: Notification unit
- 80: Vehicle position calculating section
- 81: Travel direction calculating section

## Claims

1. An agricultural field work vehicle, comprising:
a vehicle position calculating section (80) configured to calculate, as a vehicle position, a position of a vehicle body (1) of the agricultural field work vehicle in an agricultural field;
an autonomous travel control section (511) configured to steer the vehicle body (1) so that the vehicle body (1) travels autonomously along each of a plurality of target travel paths with a U-turn travel path in-between, each target travel path being set to extend linearly from a starting point position to an ending end position;
a move-off recording section (56) configured to record, as move-off information, either or both of a move-off position (Pb) and a move-off travel path, the move-off information being information related to the vehicle body (1) having moved off the target travel path (LM) while performing agricultural field work during the autonomous travel, the move-off position (Pb) being the vehicle position at a time when the vehicle body (1) moved off the target travel path (LM), the move-off travel path being the target travel path off which the vehicle body (1) moved; and
a work return management section (57) configured to (i) select a resumption travel path on a basis of the move-off information, the resumption travel path being the target travel path (LM) on which the agricultural field work vehicle, after the vehicle body (1) moved off the target travel path, resumes performing the agricultural field work during the autonomous travel, and (ii) manage a return of the vehicle body (1) to the resumption travel path or a return of the vehicle body (1) to the move-off position (Pb), **characterized in that**
the work return management section (57) includes a determining section (571) configured to determine, while the agricultural field work vehicle is being manually driven for the vehicle body (1) to return to the resumption travel path, whether the agricultural field work vehicle is able to transition from manual travel to autonomous travel,
the resumption travel path is the target travel path having the move-off position (Pb) partway,
in response to a benchmark point of the vehicle body (1) entering a zone extending over a predetermined distance from a line segment between the starting point position and the move-off position (Pb) of the resumption travel path, the determining section (571) determines that the agricultural field work vehicle is able to transition to the autonomous travel, and
the resumption travel path has a resumption position (Pr) at which the agricultural field work vehicle resumes performing the agricultural field work during the autonomous travel, the resumption position (Pr) being on the line segment.

2. The agricultural field work vehicle according to claim 1, further comprising:
a manual operation tool (24) configured to start the autonomous travel by the vehicle body (1), wherein
after the determining section (571) has determined that the agricultural field work vehicle is able to perform the transition, the manual operation tool (24) is operated to cause the autonomous travel control section (511) to start the autonomous travel by the vehicle body (1).

3. The agricultural field work vehicle according to claim 1 or 2, wherein
in a case where the determining section (571) has determined that the agricultural field work vehicle is able to perform the transition, the determining section is configured to transmit to a notification unit (72) a notification command to notify a driver that the transition is allowable.

4. The agricultural field work vehicle according to any one of claims 1 to 3, wherein
the determining section (571) is further configured to determine, as a condition for determining whether the agricultural field work vehicle is able to transition, whether the vehicle body (1) has a directional deviation from the resumption travel path which directional deviation is within an allowable deviation range.

## Patentansprüche

1. Landwirtschaftliches Feldarbeitsfahrzeug, umfassend:
einen Fahrzeugpositions-Berechnungsabschnitt (80), der derart konfiguriert ist, dass er als eine Fahrzeugposition eine Position einer Fahrzeugkarosserie (1) des landwirtschaftlichen Feldarbeitsfahrzeugs auf einem landwirtschaftlichen Feld berechnet;
einen autonomen Fahrsteuerabschnitt (511), der derart konfiguriert ist, dass er die Fahrzeugkarosserie (1) so lenkt, dass die Fahrzeugkarosserie (1) autonom entlang von jedem einer Vielzahl von Zielfahrwegen mit einem dazwischen liegenden U-Turn-Fahrweg fährt, wobei jeder Zielfahrweg so eingestellt ist, dass er sich linear von einer Startpunktposition zu einer Abschlussendposition erstreckt;
einen Anfahr-Aufzeichnungsabschnitt (56), der derart konfiguriert ist, dass er als Anfahrinformation entweder eine Anfahrposition (Pb) oder einen Anfahrfahrweg oder beides aufzeichnet, wobei die Anfahrinformation eine Information ist, die sich darauf bezieht, dass sich die Fahrzeugkarosserie (1) von dem Zielfahrweg (LM) wegbewegt hat, während sie landwirtschaftliche Feldarbeit während des autonomen Fahrens durchführt, wobei die Anfahrposition (Pb) die Fahrzeugposition zu einem Zeitpunkt ist, zu dem sich die Fahrzeugkarosserie (1) von dem Zielfahrweg (LM) wegbewegt hat, wobei der AnfahrFahrweg der Zielfahrweg ist, von dem sich die Fahrzeugkarosserie (1) wegbewegt hat; und
einen Arbeitsrückkehr-Verwaltungsabschnitt (57), der derart konfiguriert ist, dass er (i) einen Fortsetzungsfahrweg anhand der Anfahrinformation auswählt, wobei der Fortsetzungsfahrweg der Zielfahrweg (LM) ist, auf dem das landwirtschaftliche Feldarbeitsfahrzeug, nachdem sich die Fahrzeugkarosserie (1) von dem Zielfahrweg wegbewegt hat, das Durchführen der landwirtschaftlichen Feldarbeit während des autonomen Fahrens fortsetzt, und (ii) eine Rückkehr der Fahrzeugkarosserie (1) zu dem Fortsetzungsfahrweg oder eine Rückkehr der Fahrzeugkarosserie (1) zu der Anfahrposition (Pb) verwaltet,
**dadurch gekennzeichnet, dass**
der Arbeitsrückkehr-Verwaltungsabschnitt (57) einen Bestimmungsabschnitt (571) beinhaltet, der derart konfiguriert ist, dass er während des manuellen Fahrens des landwirtschaftlichen Feldarbeitsfahrzeugs, damit die Fahrzeugkarosserie (1) zum Fortsetzungsfahrweg zurückkehrt, bestimmt, ob das landwirtschaftliche Feldarbeitsfahrzeug in der Lage ist, vom manuellen Fahren zum autonomen Fahren überzugehen,
der Fortsetzungsfahrweg der Zielfahrweg mit einer Teilstrecke der Anfahrposition (Pb) ist,
als Reaktion darauf, dass ein Referenzpunkt der Fahrzeugkarosserie (1) in eine Zone eintritt, die sich über eine vorbestimmte Entfernung von einem Liniensegment zwischen der Startpunktposition und der Anfahrposition (Pb) des Fortsetzungsfahrwegs erstreckt, der Bestimmungsabschnitt (571) bestimmt, dass das landwirtschaftliche Feldarbeitsfahrzeug in der Lage ist, zum autonomen Fahren überzugehen, und
der Fortsetzungsfahrweg eine Fortsetzungsposition (Pr) aufweist, an der das landwirtschaftliche Feldarbeitsfahrzeug das Durchführen der landwirtschaftlichen Feldarbeit während des autonomen Fahrens fortsetzt, wobei die Fortsetzungsposition (Pr) auf dem Liniensegment liegt.

2. Landwirtschaftliches Feldarbeitsfahrzeug nach Anspruch 1, ferner umfassend:
ein Handbetriebswerkzeug (24), das derart konfiguriert ist, dass es das autonome Fahren der Fahrzeugkarosserie (1) startet, wobei
nachdem der Bestimmungsabschnitt (571) bestimmt hat, dass das landwirtschaftliche Feldarbeitsfahrzeug in der Lage ist, den Übergang durchzuführen, wobei das Handbetriebswerkzeug (24) betrieben wird, um den autonomen Fahrsteuerabschnitt (511) zu veranlassen, das autonome Fahren durch die Fahrzeugkarosserie (1) zu starten.

3. Landwirtschaftliches Feldarbeitsfahrzeug nach Anspruch 1 oder 2, wobei
in einem Fall, in dem der Bestimmungsabschnitt (571) bestimmt hat, dass das landwirtschaftliche Feldarbeitsfahrzeug in der Lage ist, den Übergang durchzuführen, der Bestimmungsabschnitt derart konfiguriert ist, dass er an eine Benachrichtigungseinheit (72) einen Benachrichtigungsbefehl überträgt, um einen Fahrer zu benachrichtigen, dass der Übergang zulässig ist.

4. Landwirtschaftliches Feldarbeitsfahrzeug nach einem der Ansprüche 1 bis 3, wobei
der Bestimmungsabschnitt (571) ferner derart konfiguriert ist, dass er als eine Bedingung zum Bestimmen, ob das landwirtschaftliche Feldarbeitsfahrzeug in der Lage ist, den Übergang durchzuführen, bestimmt, ob die Fahrzeugkarosserie (1) eine Richtungsabweichung von dem Fortsetzungsfahrweg aufweist, wobei die Richtungsabweichung innerhalb eines zulässigen Abweichungsbereichs liegt.

## Revendications

1. Véhicule agricole, comprenant :
une section de calcul de position de véhicule (80) configurée pour calculer, en tant que position de véhicule, une position d'un corps de véhicule (1) du véhicule agricole dans un champ agricole ;
une section de commande de déplacement autonome (511) configurée pour diriger le corps de véhicule (1) de sorte que le corps de véhicule (1) se déplace de manière autonome le long de chacun des trajets de déplacement cibles d'une pluralité de trajets de déplacement cibles avec un trajet de déplacement en demi-tour entre eux, chaque trajet de déplacement cible étant défini pour s'étendre de façon linéaire d'une position de point de départ à une position de fin ;
une section d'enregistrement de déviation (56) configurée pour enregistrer, en tant qu'informations de déviation, une position de déviation (Pb) et/ou un trajet de déplacement de déviation, les informations de déviation étant des informations associées au corps de véhicule (1) qui a dévié du trajet de déplacement cible (LM) tout en réalisant une opération agricole pendant le déplacement autonome, la position de déviation (Pb) étant la position du véhicule à un moment où le corps de véhicule (1) a dévié du trajet de déplacement cible (LM), le trajet de déplacement de déviation étant le trajet de déplacement cible à partir duquel le corps de véhicule (1) a dévié ; et
une section de gestion de retour à l'opération (57) configurée pour (i) sélectionner un trajet de déplacement de reprise sur la base des informations de déviation, le trajet de déplacement de reprise étant le trajet de déplacement cible (LM) sur lequel le véhicule agricole, après que le corps de véhicule (1) a dévié du trajet de déplacement cible, reprend la réalisation de l'opération agricole pendant le déplacement autonome, et (ii) gère un retour du corps de véhicule (1) au trajet de déplacement de reprise ou un retour du corps de véhicule (1) à la position de déviation (Pb),
**caractérisé en ce que**
la section de gestion de retour à l'opération (57) comporte une section de détermination (571) configurée pour déterminer, alors que le véhicule agricole est conduit manuellement pour que le corps de véhicule (1) retourne au trajet de déplacement de reprise, si oui ou non le véhicule agricole est apte à faire la transition d'un déplacement manuel à un déplacement autonome,
le trajet de déplacement de reprise est le trajet de déplacement cible avec la position de déviation (Pb) à mi-chemin,
en réponse à un point de référence du corps de véhicule (1) qui entre dans une zone s'étendant sur une distance prédéterminée à partir d'un segment de ligne entre la position de point de départ et la position de déviation (Pb) du trajet de déplacement de reprise, la section de détermination (571) détermine que le véhicule agricole est apte à faire la transition vers le déplacement autonome, et
le trajet de déplacement de reprise présente une position de reprise (Pr) au niveau de laquelle le véhicule agricole reprend la réalisation de l'opération agricole pendant le déplacement autonome, la position de reprise (Pr) étant sur le segment de ligne.

2. Véhicule agricole selon la revendication 1, comprenant en outre :
un outil d'opération manuelle (24) configuré pour démarrer le déplacement autonome par le corps de véhicule (1), dans lequel
après que la section de détermination (571) a déterminé que le véhicule agricole est apte à faire la transition, l'outil d'opération manuelle (24) est actionné pour amener la section de commande de déplacement autonome (511) à démarrer le déplacement autonome par le corps de véhicule (1).

3. Véhicule agricole selon la revendication 1 ou 2, dans lequel
dans un cas où la section de détermination (571) a déterminé que le véhicule agricole est apte à faire la transition, la section de détermination est configurée pour transmettre à une unité de notification (72) une instruction de notification pour notifier un conducteur que la transition est permise.

4. Véhicule agricole selon l'une quelconque des revendications 1 à 3, dans lequel
la section de détermination (571) est en outre configurée pour déterminer, en tant que condition pour déterminer si oui ou non le véhicule agricole est apte à faire la transition, si oui ou non le corps de véhicule (1) présente un écart directionnel par rapport au trajet de déplacement de reprise, ledit écart directionnel étant compris dans une plage d'écarts permis.
